# EUROPÄISCHE PATENTSCHRIFT

(11) **EP 1 134 876 B1**
(45) Veröffentlichungstag und Bekanntmachung des Hinweises auf die Patenterteilung: **28.07.2004**
(21) Anmeldenummer: 01101937.9
(22) Anmeldetag: 29.01.2001
(51) Int. Cl.: H02K 11/00, H02K 3/50

(54) **Verschaltungseinrichtung für einen Elektromotor**
Electric motor interconnection board
Panneau d'interconnexion pour moteur électrique

(30) Priorität: 06.03.2000 DE 20004185 U
(43) Veröffentlichungstag der Anmeldung: 19.09.2001
(73) Patentinhaber: ebm-papst Mulfingen GmbH & Co.KG, 74673 Mulfingen (DE)
(72) Erfinder: Streng, Gunter Dipl.-Ing.,, 74575 Schrozberg (DE)
(74) Vertreter: Zapf, Christoph, Dipl.-Ing.

(56) Entgegenhaltungen:
- EP-A- 0 029 328
- EP-A- 0 727 864
- DE-A- 3 229 711
- US-A- 4 297 627
- US-A- 4 958 051

## Beschreibung

Die vorliegende Erfindung betrifft eine Verschaltungseinrichtung zum elektrischen Verbinden mindestens einer Statorwicklung eines Elektromotors mit äußeren Anschlußleitungen, bestehend aus einer aus Isoliermaterial bestehenden, auf einer Stirnseite eines Stators, d. h. wickelkopfseitig anzuordnenden Schaltscheibe mit einer Halterung für einen Temperaturwächter und mit Verbindungspunkten, die einerseits mit der Statorwicklung und andererseits mit den Anschlußleitungen verbunden bzw. verbindbar sind.

Derartige Verschaltungseinrichtungen sind in unterschiedlichen Ausführungen bekannt. So beschreibt beispielsweise die EP 0 727 864 A2 eine solche Verschaltungsanordnung zum Verbinden von Drahtenden einer Statorwicklung mit Anschlußleitern. Diese bekannte Verschaltungsanordnung besteht im Wesentlichen aus einem ringscheibenförmigen Basisteil aus einem elektrisch isolierenden Material. Das Basisteil ist mit einer zentrischen Öffnung auf einem Stirnisolationsschaft des Stators so befestigt, dass es auch als Wickelkopfabdeckung fungiert. Auf dem Basisteil sind elektrische Verbinderelemente zum Anschluß der Drahtenden und der Anschlußleiter gehaltert. Die Verbinderelemente sind als Blechstanzteile ausgebildet und in flach auf dem Basisteil liegender Anordnung gehalten. Die Anschlußleiter werden jeweils über einen Krimpabschnitt angeschlossen, während zum Anschluß der Wicklungsdrahtenden jeweils eine Anschlußfahne vorgesehen ist, die einen als Klemmzunge ausgebildeten Anschluß zur elektrisch leitenden Verbindung mit dem jeweiligen Drahtende besitzt. Diese bekannte Verschaltungsanordnung ermöglicht wahlweise einen Betrieb mit oder ohne Temperaturwächter. Im Übrigen handelt es sich aber um ein fest vorgegebenes, nicht variables Anschlußsystem, was beispielsweise eine eventuelle Umschaltung z.B der Motor-Drehrichtung betrifft. Außerdem ist das Verschalten montagemäßig recht aufwendig und erlaubt keine Automatisierung.

Der vorliegenden Erfindung liegt die Aufgabe zugrunde, eine Verschaltungseinrichtung der genannten Art zu schaffen, die bei einem vorgegebenen, unveränderten Grundaufbau auf einfache und montagegünstige Weise eine variable Verschaltung insbesondere bezüglich der Drehrichtungsdefinition gestattet.

Erfindungsgemäß wird dies dadurch erreicht, dass der in der Halterung der Schaltscheibe sitzende Temperaturwächter einerseits mit einer ersten Anschlußleitung verbunden und andererseits durch eine Kontaktfeder eines Kontaktbrückenelementes direkt über eine metallische Gehäusefläche kontaktierbar ist, wobei die Verbindungspunkte relativ zueinander und zu dem Temperaturwächter bzw. zu dessen Gehäusefläche derart auf der Schaltscheibe angeordnet sind, dass das Kontaktbrückenelement wahlweise in einer von mindestens zwei möglichen Positionen plazierbar ist, in denen es über die Kontaktfeder den Temperaturwächter zur Vorgabe der Drehrichtung des Elektromotors mit verschiedenen Verbindungspunkten verbindet. Bei dem - vorzugsweise durch ein einfaches und preiswertes Blechformteil gebildeten - Kontaktbrückenelement handelt es sich somit um ein insbesondere steckbares Multifunktionsteil, welches den Temperaturwächter und - je nach Position - mindestens einen Anschluß der jeweiligen Wicklung kontaktiert. Durch die Erfindung kann vorteilhafterweise unabhängig von der eigentlichen Statorfertigung auf einfache Weise die jeweils gewünschte Drehrichtung des Motors festgelegt werden. Es wird eine kostengünstige und fertigungsoptimierte Montage erreicht.

Weitere vorteilhafte Ausgestaltungsmerkmale der Erfindung sind in den Unteransprüchen enthalten.

Anhand eines in der Zeichnung veranschaulichten, bevorzugten Ausführungsbeispiels soll die Erfindung genauer erläutert werden. Dabei zeigen:
- Fig. 1: eine Draufsicht auf die erfindungsgemäße Verschaltungseinrichtung in einer Anwendung für eine erste Motor-Drehrichtung,
- Fig. 2: eine Ansicht wie in Fig. 1, jedoch in einer Anwendung für eine entgegengesetzte Drehrichtung,
- Fig. 3: ein schematisches Schaltbild zu der Situation gemäß Fig. 1,
- Fig. 4: ein entsprechendes Schaltbild zur Situation gemäß Fig. 2,
- Fig. 5: eine vergrößerte Perspektivdarstellung des erfindungsgemäßen Kontaktbrückenelementes und
- Fig. 6: eine vergrößerte Perspektivansicht des Temperaturwächters.

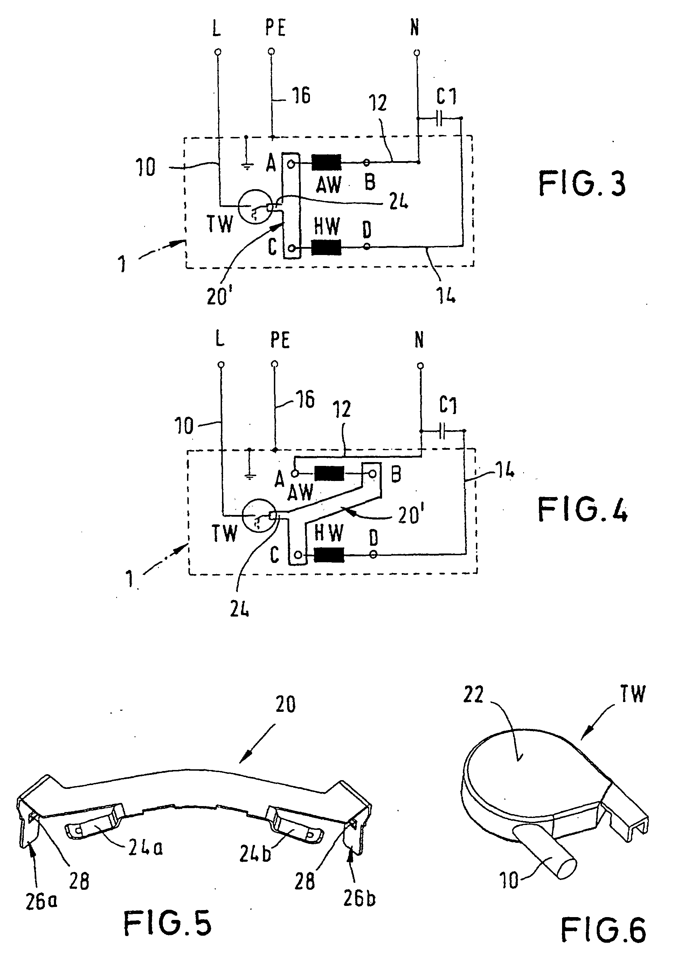

Die - insgesamt mit der Bezugsziffer 1 bezeichnete - erfindungsgemäße Verschaltungseinrichtung ist in der dargestellten, bevorzugten Ausführung beispielhaft für einen Einphasen-Kondensatormotor konzipiert, der - siehe dazu Fig. 3 und 4 - eine erste Statorwicklung als Arbeitswicklung AW und eine zweite Statorwicklung als Hilfswicklung HW aufweist, wobei die Hilfswicklung HW über einen Kondensator C1 an einer Anschlußspannung liegt. Bei solchen Einphasen-Kondensatormotoren kann die Drehrichtung umgekehrt werden, indem eine Wicklung, beispielsweise die Arbeitswicklung AW oder aber die Hilfswicklung HW, "umgepolt" wird, indem die Wicklungsanschlüsse bei ansonsten gleicher Bestromung umgetauscht werden. Bei dem dargestellten, bevorzugten Ausführungsbeispiel ist die Arbeitswicklung AW "umpolbar" bei stets gleichem Anschluß der Hilfswicklung HW.

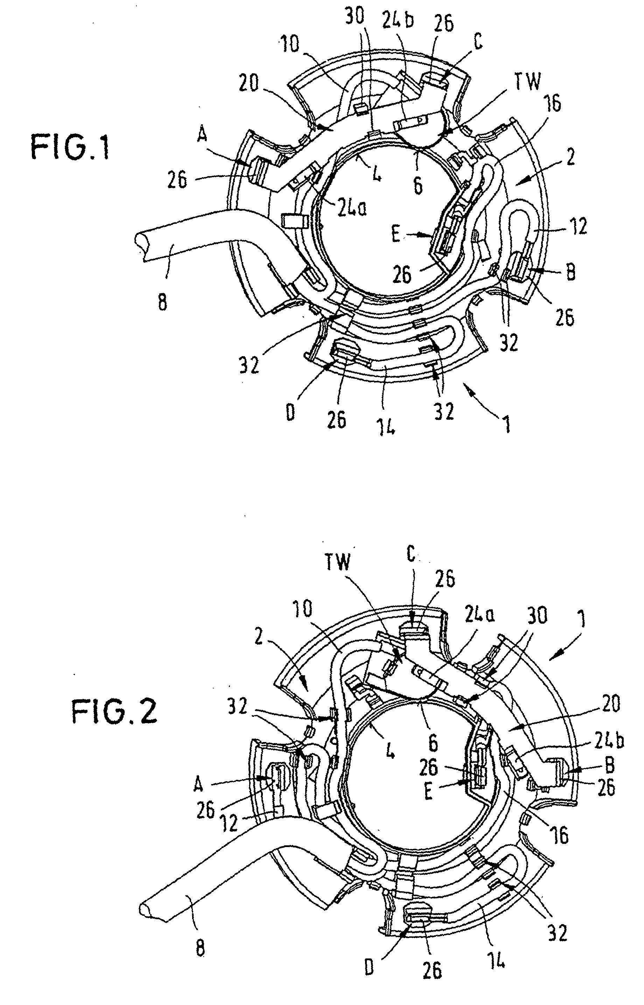

Gemäß Fig. 1 und 2 besteht die erfindungsgemäße Verschaltungseinrichtung 1 aus einer elektrisch isolierenden Schaltscheibe 2, die auf einer Stirnseite eines nicht dargestellten Stators anzuordnen ist. Dazu wird die Schaltscheibe 2 mit einer zentrischen Öffnung 4 auf einen Stirnisolationsschaft des Stators aufgesetzt und befestigt. Somit fungiert die Schaltscheibe 2 auch als Wickelkopfabdeckung.

Die Schaltscheibe 2 weist zur Halterung eines Temperaturwächters TW (siehe dazu auch die gesonderte Darstellung in Fig. 6) eine Aufnahme 6 auf, die an die Form des Temperaturwächters TW angepasst und nicht genauer dargestellte Rastmittel aufweist, so dass der Temperaturwächter lediglich in die Aufnahme 6 eingesetzt zu werden braucht und dann selbsttätig kraft- und/oder formschlüssig fixiert ist. Auf der Schaltscheibe 2 sind zudem in einer bestimmten Verteilung Verbindungspunkte A, B, C und D angeordnet, die einerseits mit der jeweiligen Statorwicklung AW, HW und andererseits mit äußeren Anschlußleitungen verbunden bzw. verbindbar sind.

Gemäß Fig. 1 und 2 können die Anschlußleitungen zu einem Kabel 8 zusammengefasst und dazu von einer Ummantelung umgeben sein.

Eine erste Anschlußleitung 10 ist unmittelbar mit einem Leitungsanschluß des Temperaturwächters TW verbunden. Gemäß Fig. 3 und 4 wird diese erste Anschlußleitung 10 extern mit einem Phasenleiter L einer Anschlußspannung (Netzspannung) verbunden. Eine zweite Anschlußleitung 12 wird extern mit einem Null-Leiter der Anschlußspannung verbunden und auf der Schaltscheibe 2 - je nach gewünschter Drehrichtung - mit dem Verbindungspunkt B (Fig. 1 und 3) oder mit dem Verbindungspunkt A ( Fig. 2 und 4). Zwischen den Verbindungspunkten A und B liegt die Arbeitswicklung AW. Eine dritte Anschlußleitung 14 führt von dem mit der Hilfswicklung HW verbundenen Verbindungspunkt D nach außen zum Anschluß an den Kondensator C1. Schließlich ist eine vierte Anschlußleitung 16 als Schutzleiter vorgesehen, über den metallische Teile des Motors, insbesondere ein Statorblechpaket, mit Erdpotential verbunden werden. Diese Verbindung erfolgt insbesondere über einen zusätzlichen Verbindungspunkt E im inneren Randbereich der zentrischen Öffnung 4 der Schaltscheibe 2.

Erfindungsgemäß ist ein spezielles Kontaktbrückenelement 20 vorgesehen (siehe dazu auch die gesonderte Darstellung in Fig. 5), welches zum direkten Kontaktieren einer metallischen Gehäusefläche 22 des Temperaturwächters TW mindestens eine Kontaktfeder 24 aufweist. In dem dargestellten, bevorzugten Ausführungsbeispiel ist allerdings das Kontaktbrückenelement 20 derart symmetrisch ausgebildet, dass es zwei gleichartige Kontaktfedern 24a und 24b aufweist. Dabei sind erfindungsgemäß die Verbindungspunkte A bis D relativ zueinander und zu dem Temperaturwächter TW bzw. zu dessen metallischer Gehäusefläche 22 derart auf der Schaltscheibe 2 angeordnet, dass das Kontaktbrückenelement 20 wahlweise in einer von zwei möglichen Positionen plazierbar ist, in denen es über die jeweilige Kontaktfeder 24a oder 24b den Temperaturwächter TW kontaktiert und zur Vorgabe der Drehrichtung des Elektromotors mit verschiedenen Verbindungspunkten verbindet. In der Anwendung nach Fig. 1 und 3 verbindet das Kontaktbrückenelement 20 den Temperaturwächter TW mit den Verbindungspunkten A und C. Dabei ist dann die zweite Anschlußleitung 12 mit dem Verbindungspunkt B verbunden. In der alternativen Anwendung nach Fig. 2 und 4 verbindet das Kontaktbrückenelement 20 den Temperaturwächter TW mit den Verbindungspunkten B und C, während der Verbindungspunkt A mit der zweiten Anschlußleitung 12 verbunden ist. In beiden Fällen liegt die dritte Anschlußleitung 14 am Verbindungspunkt D. Die Verbindungspunkte A bis D sind vorzugsweise gleichmäßig (radialsymmetrisch) über den Umfang der Schaltscheibe 2 verteilt angeordnet, so dass sie jeweils um 90° voneinander beabstandet sind. Das Kontaktbrückenelement 20 erstreckt sich dabei mit einer leicht bogenförmigen Kontur über einen Winkel von 90° (Viertelkreis).

In den Fig. 3 und 4 sind die beiden möglichen Schaltzustände vereinfacht dargestellt, wobei das Kontaktbrückenelement jeweils nur schematisch und auch nicht in beiden Fällen übereinstimmend dargestellt ist, weshalb es hier auch mit der Bezugsziffer 20' gekennzeichnet ist. Anhand dieser vereinfachten Darstellungen ist leicht nachvollziehbar, dass durch die Erfindung die Anschlüsse der Arbeitswicklung AW auf einfache Weise "umgepolt" werden können, während die Hilfswicklung HW stets gleich beschaltet bleibt.

In weiterer Ausgestaltung der Erfindung ist vorgesehen, dass die Verbindungspunkte A bis D und vorzugsweise E der Schaltscheibe 2 über Steckverbindungen mit den Statorwicklungen AW, HW verbindbar sind. Diese Steckverbindungen liegen auf der in den Fig. 1 und 2 nicht erkennbaren, dem Stator zugewandten Seite der Schaltscheibe 2 und sind vorzugsweise so ausgebildet, dass sie in einer axialen Fügerichtung verbunden und getrennt werden können. Dazu sind am Stator und in der Schaltscheibe 2 entsprechende Steckverbinderelemente gehaltert. Auf der Seite der Schaltscheibe 2 handelt es sich um insbesondere als Flachstecker ausgebildete Steckverbinderelemente 26, die sich durch Öffnungen der Schaltscheibe 2 von deren vom Stator wegweisenden Seite in Richtung des Stators erstrecken. Mit Ausnahme der ersten Anschlußleitung 10, die unmittelbar mit dem Temperaturwächter TW verbunden ist, sind die übrigen Anschlußleitungen 12, 14 und 16 jeweils vorzugsweise über eine Krimpverbindung mit einem der Steckverbinderelemente 26 verbunden. Gemäß Fig. 5 weist das Kontaktbrückenelement 20 zwei umgewinkelte Endabschnitte auf, die jeweils ein Steckverbinderelement 26a, 26b bilden. Diese einstückigen, abgewinkelten Steckverbinderelemente 26a und 26b sind derart angeordnet und ausgerichtet, dass sie in den beiden Wahlpositionen jeweils durch zwei Durchführöffnungen der Schaltscheibe 2 zur Bildung der Verbindungspunkte A und C oder C und B geführt werden können.

Dabei ist es vorteilhaft, wenn die Steckverbinderelemente 26 in den jeweiligen Öffnungen der Schaltscheibe 2 fixiert sitzen, wozu sie insbesondere widerhakenartige Rastelemente 28 aufweisen können, wie dies beispielhaft in Fig. 5 für die Steckverbinderelemente 26a, b des Kontaktbrückenelementes 20 dargestellt ist. Durch diese Ausgestaltung wird gleichzeitig auch eine selbsttätige Fixierung des gesamten Kontaktbrückenelementes 20 erreicht. Zudem ist es aber vorteilhaft, wenn das Kontaktbrückenelement 20 über zusätzliche Haltemittel 30 auf der Schaltscheibe 2 fixiert wird. Gemäß Fig. 1 und 2 handelt es sich bei den Haltemitteln 30 um paarweise angeordnete Schnapphaken, wobei jeweils mindestens ein Paar von Schnapphaken für jede Position des Kontaktbrückenelementes 20 vorgesehen ist. Es ist vorteilhaft, die Haltemittel 30 so anzuordnen, dass das Kontaktbrückenelement 20 jeweils in einem Bereich fixiert wird, der relativ nahe an der jeweiligen "aktiven", d.h. den Temperaturwächter TW kontaktierenden Kontaktfeder 24a oder b liegt. Hierdurch wird vorteilhafterweise eine Art Widerlager gebildet, um stets einen ausreichenden Kontaktdruck der Kontaktfeder auf dem Temperaturwächter TW zu gewährleisten.

Wie sich weiterhin aus Fig. 1 und 2 ergibt, weist die Schaltscheibe 2 vorteilhafterweise Fixiermittel 32 für die Anschlußleitungen 10 bis 16 auf, und zwar insbesondere in Form von jeweils paarweise angeordneten Rasthaken zur klemmenden Aufnahme der jeweiligen Anschlußleitung. Diese Fixiermittel 32 können in jeder geeigneten, an den jeweils gewünschten Verlauf der Leitungen angepassten Verteilung auf der Schaltscheibe 2 angeordnet sein.

Die Erfindung ist nicht auf das dargestellte und beschriebene Ausführungsbeispiel beschränkt, sondern umfasst auch alle im Sinne der Erfindung gleichwirkenden Ausführungen. So ist - wie oben bereits angedeutet - die Umkehrung der Drehrichtung natürlich auch dadurch möglich, dass die Anschlüsse der Hilfswicklung HW getauscht werden und die Arbeitswicklung AW stets gleich beschaltet bleibt. In diesem Falle wird man, um die optimale Fertigung des Motors beizubehalten, entweder die räumliche Anordnung des Kontaktbrückenelementes 20 auf der Schaltscheibe 2 den veränderten Bedingungen anpassen, oder das Wickelschema der Statorwicklung so ändern, dass die Anschlusspunkte der Wicklungen mit den in den Fig. 1 und 2 dargestellten Anschlusspunkten übereinstimmen.

## Patentansprüche

1. Verschaltungseinrichtung zum elektrischen Verbinden mindestens einer Statorwicklung (AW, HW) eines Elektromotors mit äußeren Anschlußleitungen (10, 12, 14, 16), bestehend aus einer Schaltscheibe (2) mit einer Halterung (6) für einen Temperaturwächter (TW) und mit Verbindungspunkten (A, B, C, D), die einerseits mit der Statorwicklung (AW, HW) und andererseits mit den Anschlußleitungen (10 bis 16) verbunden bzw. verbindbar sind,
**dadurch gekennzeichnet,**
**dass** der in der Halterung (6) der Schaltscheibe (2) sitzende Temperaturwächter (TW) durch eine Kontaktfeder (24) eines Kontaktbrückenelementes (20) direkt über eine metallische Gehäusefläche (22) kontaktierbar ist, wobei die Verbindungspunkte (A, B, C, D) relativ zueinander und zu dem Temperaturwächter (TW) derart auf der Schaltscheibe (2) angeordnet sind, dass das Kontaktbrückenelement (20) wahlweise in einer von mindestens zwei möglichen Positionen plazierbar ist, in denen es über die Kontaktfeder (24) den Temperaturwächer (TW) zur Vorgabe der Drehrichtung des Elektromotors mit verschiedenen Verbindungspunkten (A, C oder B, C) verbindet.

2. Verschaltungseinrichtung nach Anspruch 1,
**dadurch gekennzeichnet,**
**dass** die Schaltscheibe (2) vier Verbindungspunkte (A, B, C, D) aufweist, wobei die ersten beiden Verbindungspunkte (A, B) mit einer ersten Statorwicklung (AW) und die zweiten beiden Verbindungspunkte (C, D) mit einer zweiten Statorwicklung (HW) verbindbar sind, wobei zur Vorgabe der Motor-Drehrichtung die Anschlüsse einer der beiden Statorwicklungen (AW oder HW), insbesondere der ersten Statorwicklung (AW), durch entsprechende Positionierung des Kontaktbrückenelementes (20) umtauschbar sind.

3. Verschaltungseinrichtung nach Anspruch 2,
**dadurch gekennzeichnet,**
**dass** das Kontaktbrückenelement (20) derart gestaltet ist, dass es in beiden möglichen Positionen zusätzlich auch eine Verbindung zu dem einen, stets gleichen Verbindungspunkt (C oder A) der jeweils anderen Statorwicklung (HW oder AW), insbesondere der zweiten Statorwicklung (HW), herstellt.

4. Verschaltungseinrichtung nach einem der Ansprüche 1 bis 3,
**dadurch gekennzeichnet,**
**dass** die Verbindungspunkte (A bis D) der Schaltscheibe (2) über Steckverbindungen mit den Statorwicklungen (AW, HW) verbindbar sind, wozu an einem Stator und in der Schaltscheibe (2) entsprechende Steckverbinderelemente gehaltert sind.

5. Verschaltungseinrichtung nach Anspruch 4,
**dadurch gekennzeichnet,**
**dass** die in der Schaltscheibe (2) gehalterten, die Verbindungspunkte (A bis D) bildenden Steckverbinderelemente (26) sich durch Öffnungen der Schaltscheibe (2) von deren vom Stator wegweisenden Seite in Richtung des Stators erstrecken und hier insbesondere als Flachstecker ausgebildet sind.

6. Verschaltungseinrichtung nach Anspruch 4 oder 5,
**dadurch gekennzeichnet,**
**dass** die die Verbindungspunkte (A bis D) bildenden Steckverbinderelemente (26) unmittelbar mit jeweils einer Anschlußleitung (12 bis 16) verbunden bzw. von einstückigen Abschnitten des Kontaktbrückenelementes (20) gebildet sind.

7. Verschaltungseinrichtung nach einem der Ansprüche 4 bis 6,
**dadurch gekennzeichnet,**
**dass** die Steckverbinderelemente (26) in den Öffnungen der Schaltscheibe (2) fixiert sitzen, wozu sie insbesondere widerhakenartige Rastelemente (28) aufweisen.

8. Verschaltungseinrichtung nach einem der Ansprüche 1 bis 7,
**dadurch gekennzeichnet,**
**dass** das Kontaktbrückenelement (20) über Haltemittel (30) auf der Schaltscheibe (2) fixiert wird.

9. Verschaltungseinrichtung nach einem der Ansprüche 4 bis 8,
**dadurch gekennzeichnet,**
**dass** das Kontaktbrückenelement (20) von einem Blechstreifen gebildet ist und zwei endseitig abgewinkelte Steckverbinderlemente (26a, 26b) als Verbindungspunkte (A, C oder C, B) sowie vorzugsweise zwei Kontaktfedern (24a, 24b) zum Kontaktieren der Gehäusefläche (22) des Temperaturwächters (TW) in der einen oder der anderen Position des Kontaktbrückenelements (20) aufweist.

10. Verschaltungseinrichtung nach einem der Ansprüche 1 bis 9,
**dadurch gekennzeichnet,**
**dass** die Verbindungspunkte (A bis D) symmetrisch auf der Schaltscheibe (2) verteilt angeordnet und jeweils um 90° in Umfangsrichtung voneinander beabstandet sind.

11. Verschaltungseinrichtung nach einem der Ansprüche 1 bis 10,
**dadurch gekennzeichnet,**
**dass** die erste, direkt mit dem Temperaturwächter (TW) verbundene Anschlußleitung (10) mit der Phase (L) einer Anschlußspannung zu verbinden ist.

12. Verschaltungseinrichtung nach einem der Ansprüche 4 bis 11,
**dadurch gekennzeichnet,**
**dass** eine zweite, mit einem Null-Leiter (N) der Anschlußspannung zu verbindende Anschlußleitung (12) je nach gewünschter Drehrichtung mit dem als erster Verbindungspunkt (A) oder als zweiter Verbindungspunkt (B) einzusetzenden Steckverbinderelement (26) verbunden ist.

13. Verschaltungseinrichtung nach einem der Ansprüche 4 bis 12,
**dadurch gekennzeichnet,**
**dass** eine dritte, mit ihrem äußeren Ende insbesondere mit einem Kondensator (C1) zu verbindende Anschlußleitung (14) anderendig mit einem als vierter Verbindungspunkt (D) einzusetzenden Steckverbinderelement (26) verbunden ist.

14. Verschaltungseinrichtung nach einem der Ansprüche 4 bis 11,
**dadurch gekennzeichnet,**
**dass** eine dritte, mit ihrem äußeren Ende insbesondere mit einem Kondensator (C1) zu verbindende Anschlußleitung (14) anderendig je nach gewünschter Drehrichtung mit dem als vierter Verbindungspunkt (D) oder als dritter Verbindungspunkt (C) einzusetzenden Steckverbinderelement (26) verbunden ist.

15. Verschaltungseinrichtung nach einem der Ansprüche 1 bis 14,
**dadurch gekennzeichnet,**
**dass** eine vierte Anschlußleitung (16) als Schutzleiter mit einem zusätzlichen, in der Schaltscheibe (2) gehalterten Steckverbinderteil (26) verbunden ist.

16. Verschaltungseinrichtung nach einem der Ansprüche 1 bis 15,
**dadurch gekennzeichnet,**
**dass** die Schaltscheibe (2) Fixiermittel (32) für die Anschlußleitungen (10 bis 16) aufweist, insbesondere in Form von jeweils paarweise angeordneten Rasthaken zur klemmenden Aufnahme der jeweiligen Anschlußleitung.

17. Verschaltungseinrichtung nach einem der Ansprüche 1 bis 16,
**dadurch gekennzeichnet,**
**dass** die Halterung (6) des Temperaturwächters (TW) als Aufnahmeöffnung der Schaltscheibe (2) ausgebildet und mit Rastmitteln zur formschlüssigen oder kraftformschlüssigen Halterung des Temperaturwächters (TW) ausgestattet ist.

## Claims

1. Connecting device for electrical connection of at least one stator winding (AW, HW) of an electric motor to external connecting lines (10, 12, 14, 16), comprising a switching disk (2) with a holder (6) for a temperature monitor (TW) and with junction points (A, B, C, D), which are connected or can be connected firstly to the stator winding (AW, HW) and secondly to the connecting lines (10 to 16),
**characterized**
**in that** the temperature monitor (TW), which is seated in the holder (6) for the switching disk (2) can be made contact with directly via a metallic housing surface (22) by means of a contact spring (24) of a contact link element (20), with the junction points (A, B, C, D) being arranged on the switching disk (2) relatively to one another and to the temperature monitor (TW) such that the contact link element (20) can selectively be placed in one of at least two possible positions, in which, via the contact spring (24), it connects the temperature monitor (TW) to different junction points (A, C or B, C) in order to predetermine the rotation direction of the electric motor.

2. Connecting device according to Claim 1,
**characterized**
**in that** the switching disk (2) has four junction points (A, B, C, D), in which case the first two junction points (A, B) can be connected to a first stator winding (AW), and the second two junction points (C, D) can be connected to a second stator winding (HW), in which case one of the two stator windings (AW or HW), in particular the first stator winding (AW), can be reversed by appropriate position of the contact link element (20) in order to predetermine the motor rotation direction.

3. Connecting device according to Claim 2,
**characterized**
**in that** the contact link element (20) is designed such that, in the two possible positions, it additionally also produces a connection to one (always the same) junction point (C or A) of the respective other stator winding (AW or HW), in particular the second stator winding (HW).

4. Connecting device according to one of Claims 1 to 3,
**characterized**
**in that** the junction points (A to D) of the switching disk (2) can be connected to the stator windings (AW, HW) via plug connections, for which purpose appropriate plug connector elements are held on a stator and in the switching disk (2).

5. Connecting device according to Claim 4,
**characterized**
**in that** the plug connector elements (26) which are held in the switching disk (2) and form the junction points (A to D) extend through openings in the switching disk (2) from its side facing away from the stator in the direction of the stator where, in particular, they are in the form of flat plugs.

6. Connecting device according to Claim 4 or 5,
**characterized**
**in that** the plug connector elements (26) which form the junction points (A to D) are directly connected to a respective connecting line (12 to 16), or are formed by integral sections of the contact link element (20).

7. Connecting device according to one of Claims 4 to 6,
**characterized**
**in that** the plug connector elements (26) are seated fixed in the openings in the switching disk (2), for which purpose they have, in particular, barb-like latching elements (28).

8. Connecting device according to one of Claims 1 to 7,
**characterized**
**in that** the contact link element (20) is fixed on the switching disk (2) via holding means (30).

9. Connecting device according to one of Claims 4 to 8,
**characterized**
**in that** the contact link element (20) is formed by a sheet-metal strip and has two plug connector elements (26a, 26b), which are bent at the ends, as the junction points (A, C or C, B), preferably as well as two contact springs (24a, 24b) for making contact with the housing surface (22) of the temperature monitor (TW) when the contact link element (20) is in one position or the other.

10. Connecting device according to one of Claims 1 to 9,
**characterized**
**in that** the junction points (A to D) are arranged distributed symmetrically on the switching disk (2) and are each separated from one another by 90º in the circumferential direction.

11. Connecting device according to one of Claims 1 to 10,
**characterized**
**in that** the first connecting line (10), which is connected directly to the temperature monitor (TW), can be connected to the phase (L) of an applied voltage.

12. Connecting device according to one of Claims 4 to 11,
**characterized**
**in that** a second connecting line (12), which can be connected to a neutral conductor (N) of the applied voltage, is connected, depending on the desired rotation direction, to the plug connector element (26) which can be used as the first junction point (A) or as the second junction point (B).

13. Connecting device according to one of Claims 4 to 12,
**characterized**
**in that** a third connecting line (14), whose outer end can be connected in particular to a capacitor (C1), is connected at the other end to a plug connector element (26) which can be used as the fourth junction point (D).

14. Connecting device according to one of Claims 4 to 11,
**characterized**
**in that** a third connecting line (14), whose outer end can be connected in particular to a capacitor (C1), is connected at the other end, depending on the desired rotation direction, to the plug connector element (26) which can be used as the fourth junction point (D) or as the third junction point (C).

15. Connecting device according to one of Claims 1 to 14,
**characterized**
**in that** a fourth connecting line (16) is connected as a protective earth conductor to an additional plug connector part (26) which is held in the switching disk (2).

16. Connecting device according to one of Claims 1 to 15,
**characterized**
**in that** the switching disk (2) has fixing means (32) for the connecting lines (10 to 16), in particular in the form of latching hooks, which are each arranged in pairs, in order to hold the respective connecting line such that it is clamped in place.

17. Connecting device according to one of Claims 1 to 16,
**characterized**
**in that** the holder (6) for the temperature monitor (TW) is in the form of a retaining opening in the switching disk (2), and is equipped with latching means for holding the temperature monitor (TW) in an interlocking or force-fitting manner.

## Revendications

1. Dispositif de câblage pour connecter électriquement au moins un bobinage de stator (AW, HW) d'un moteur électrique à des lignes de raccordement extérieures (10, 12, 14, 16), composé d'un disque de commande (2) possédant une monture (6) pour un contrôleur de température (TW) et des points de connexion (A, B, C, D) qui sont connectées ou peuvent être connectés, d'une part, à l'enroulement de stator (AW, HW) et, d'autre part, aux lignes de raccordement (10 à 16),
**caractérisé en ce que**
le contrôleur de température (TW) logé dans la monture (6) du disque de commande (2) peut être mis directement en contact, par un ressort de contact (24) d'une barrette de contact (20), avec une surface métallique (22) du boîtier, les points de connexion (A, B, C, D) étant disposés sur le disque de commande (2), les uns par rapport aux autres et par rapport au contrôleur de température (TW), de telle manière que la barrette de contact (20) puisse être placée sélectivement dans l'une d'au moins deux positions possibles dans lesquelles il connecte le contrôleur de température (TW) à différents points de connexion (A, C ou B, C), par l'intermédiaire du ressort de contact (24), pour fixer le sens de rotation du moteur électrique.

2. Dispositif de câblage selon la revendication 1,
**caractérisé en ce que**
le disque de commande (2) présente quatre points de connexion (A, B, C, D), les deux premiers points de connexion (A, B) pouvant être reliés à un premier enroulement de stator (AW)et les deux deuxièmes points de connexion (C, D) pouvant être connectés à un deuxième enroulement de stator (HW), cependant que, pour la fixation du sens de rotation du moteur, les connexions d'un des deux enroulements du stator (AW ou HW), en particulier du premier enroulement de stator (AW) peuvent être permutés par un positionnement approprié de la barrette de contact (20).

3. Dispositif de câblage selon la revendication 2,
**caractérisé en ce que**
la barrette de contact (20) est configurée de manière à établir aussi en supplément dans les deux positions possibles une connexion sur l'un, toujours le même, des points de connexion (C ou A) de l'autre enroulement de stator (HW ou AW), en particulier du deuxième enroulement de stator (HW).

4. Dispositif de câblage selon une des revendications 1 à 3,
**caractérisé en ce que**
les points de connexion (A à D) du disque de commande (2) peuvent être reliés aux enroulements du stator (AW, HW) par l'intermédiaire de connecteurs à broche, des éléments de connecteurs à broche correspondants étant fixés à cet effet sur un stator et dans le disque de commande (2).

5. Dispositif de câblage selon la revendication 4,
**caractérisé en ce que**
les éléments de connecteurs à broche (26) fixés dans le disque de commande (2) et qui forment des points de connexion (A à D) s'étendent à travers des ouvertures du disque de commande (2), en partant du côté de ce dernier qui est à l'opposé du stator, et en se dirigeant vers le stator et sont en particulier constitués ici par des broches plates.

6. Dispositif de câblage selon la revendication 4 ou 5,
**caractérisé en ce que**
les éléments de connecteurs à broche (26) qui forment les points de connexion (A à D) sont connectés directement chacun à une ligne de connexion (12 à 16) ou sont formés par des segments en une seule pièce de la barrette de contact (20).

7. Dispositif de câblage selon une des revendications 4 à 6,
**caractérisé en ce que**
les éléments de connecteurs à broche (26) sont disposés fixés dans les ouvertures du disque de commande (2) et présentent à cet effet en particulier des éléments d'arrêt en forme de crochet (28).

8. Dispositif de câblage selon l'une des revendications 1 à 7,
**caractérisé en ce que**
la barrette de contact (20) est fixée sur le disque de commande (2) par des moyens de retenue (30).

9. Dispositif de câblage selon une des revendications 4 à 8,
**caractérisé en ce que**
la barrette de contact (20) est formé par une lame de tôle et présente deux éléments de connecteurs à broche coudés en bout (26a, 26b) en tant que points de connexion (A, C ou C, B), ainsi que de préférence deux ressorts de contact (24a, 24b) pour la mise en contact de la surface (22) du boîtier du contrôleur de température (TW) dans l'une ou dans l'autre position de la barrette de contact (20).

10. Dispositif de câblage selon une des revendications 1 à 9,
**caractérisé en ce que**
les points de connexion (A à D) sont répartis symétriquement sur le disque de commande (2) et espacés l'un de l'autre de 90° dans la direction circonférentielle.

11. Dispositif de câblage selon une des revendications 1 à 10,
**caractérisé en ce que**
la première ligne de connexion (10), connectée directement au contrôleur de température (TW), doit être connectée à la phase (L) d'une tension de raccordement.

12. Dispositif de câblage selon l'une des revendications 4 à 11,
**caractérisé en ce qu'**
une deuxième ligne de raccordement (12) qui doit être connectée à un conducteur de neutre (N) de la tension de raccordement est connectée à l'élément de connecteur à broche (26) qui doit être utilisé comme premier point de connexion (A) ou comme deuxième point de connexion (B), selon le sens de rotation souhaité.

13. Dispositif de câblage selon une des revendications 4 à 12,
**caractérisé en ce qu'**
une troisième ligne de raccordement (14) qui doit être connectée par son extrémité extérieure, en particulier à un condensateur (C1), est connectée par son autre extrémité à un élément de connecteur à broche (26) qui doit être utilisé comme quatrième point de connexion (D).

14. Dispositif de câblage selon l'une des revendications 4 à 11,
**caractérisé en ce qu'**
une troisième ligne de raccordement (14) qui doit être connectée par son extrémité extérieure, en particulier à un condensateur (C1), est connectée par l'autre extrémité à l'élément de connecteur à broche (26) qui doit être utilisé comme quatrième point de connexion (D) ou comme troisième point de connexion (C), selon le sens de rotation souhaité.

15. Dispositif de câblage selon l'une des revendications 1 à 14,
**caractérisé en ce qu'**
une quatrième ligne de raccordement (16) est connectée, en qualité de conducteur de protection, à une partie de connecteur à broche (26) supplémentaire qui est tenue dans le disque de commande (2).

16. Dispositif de câblage selon l'une des revendications 1 à 15,
**caractérisé en ce que**
le disque de commande (2) présente des moyens de fixation (32) pour les lignes de raccordement (10 à 16), en particulier sous la forme de crochets d'arrêt disposés par paires à chaque fois, pour recevoir la ligne de raccordement correspondante par serrage.

17. Dispositif de câblage selon l'une des revendications 1 à 16,
**caractérisé en ce que**
la fixation (6) du contrôleur de température (TW) est constituée par une ouverture de réception du disque de commande (2) et est équipée de moyens d'arrêt pour la fixation du contrôleur de température (TW) par sûreté de forme ou par action de force.
